# EUROPEAN PATENT SPECIFICATION

(11) **EP 4 491 928 B1**
(45) Date of publication and mention of the grant of the patent: **19.08.2026**
(21) Application number: 24779536.2
(22) Date of filing: 14.03.2024
(51) Int. Cl.: F16L 57/00, F16L 55/00, F24F 1/26, F16L 19/065, F16L 11/12, F16L 55/115

(54) **PIPE JOINT COVER**
ROHRVERBINDUNGSABDECKUNG
COUVRE-JOINT DE TUYAU

(30) Priority: 29.03.2023 JP 2023052892; 30.06.2023 JP 2023108533
(43) Date of publication of application: 15.01.2025
(73) Proprietor: DAIKIN INDUSTRIES, LTD., Osaka-shi, Osaka 530-0001 (JP)
(72) Inventor: FUKUSHIMA, Wataru, Osaka-shi, Osaka 530-0001 (JP); SUHARA, Ryota, Osaka-shi, Osaka 530-0001 (JP); WASAKA, Takahiro, Osaka-shi, Osaka 530-0001 (JP); NAKAYAMA, Toshimichi, Osaka-shi, Osaka 530-0001 (JP); SHIOHAMA, Kosuke, Osaka-shi, Osaka 530-0001 (JP); MIYATANI, Naonobu, Osaka-shi, Osaka 530-0001 (JP); OJI, Kana, Osaka-shi, Osaka 530-0001 (JP)
(74) Representative: Hoffmann Eitle
(86) International application number: PCT/JP2024/010090
(87) International publication number: WO 2024/203407

(56) References cited:
- EP-A1- 3 879 163
- WO-A1-2007/058290
- JP-A- 2003 156 191
- JP-A- 2003 156 191
- JP-A- 2003 247 689
- JP-A- 2003 247 689
- JP-A- 2005 233 350
- JP-A- 2005 233 350
- JP-A- 2008 025 660
- JP-A- 2008 025 660
- JP-A- 2010 025 294
- JP-A- 2013 167 326
- JP-A- 2013 167 326
- JP-A- 2014 178 069
- JP-A- 2020 094 683
- JP-A- 2020 179 472
- JP-A- S59 212 595

## Description

### TECHNICAL FIELD

The present disclosure relates to a pipe joint cover.

### BACKGROUND ART

In the field of refrigeration apparatuses such as air conditioners, a "flared joint" is widely known as a pipe joint that connects refrigerant pipes to each other or connects a refrigerant pipe to an element component such as a valve. The flared joint includes, for example, a j oint body provided at a pipe end of one of the refrigerant pipes connected to each other and having an external thread, and a cap nut provided at a pipe end of the other refrigerant pipe and fastened to the external thread of the joint body. The pipe end of the other refrigerant pipe is flared, and the cap nut is fastened to the joint body with the flared portion hooked on the cap nut, and thus, the refrigerant pipes are connected to each other.

In the flared joint as described above, the accuracy of flaring tends to vary depending on an operator, and the quality of the connection portion of the refrigerant pipes is difficult to stabilize. In order to solve such a problem, a pipe joint that does not require flaring is proposed in PATENT LITERATURE 1 and the like.

The pipe joint of PATENT LITERATURE 1 includes a joint body and a cap nut similarly to the conventional flared joint, and the cap nut is internally provided with a stop ring. In this pipe joint, the pipe end of the other refrigerant pipe is inserted into the cap nut, and the cap nut is fastened to the joint body. Thus, the stop ring is engaged with and fixed to the other refrigerant pipe, and the refrigerant pipes are connected. Therefore, the other refrigerant pipe does not need to be flared, and the work is substantially completed only by a step of inserting the refrigerant pipe into the cap nut and a step of fastening the cap nut to the joint body. It is therefore possible to suppress variations in quality of the connection portion of the refrigerant pipes.

### CITATION LIST

### [PATENT LITERATURE]

PATENT LITERATURE 1: International Patent Publication No. 2020/262318

EP 3 879 163 A1 relates, according to its abstract, to a plug for closing a receptacle and relates to a pipe for supplying drinking water. JP 2003-156191 A, which relates to pipes for supplying hot and cold water in buildings, and JP 2003-247689 A are further prior art, as are JP 2013-167326 A, JP 2008-025660 A, JP 2005-233350 A, and JP 2020-179472 A.

### SUMMARY OF THE INVENTION

### [TECHNICAL PROBLEM]

In the pipe joint described in PATENT LITERATURE 1, an insertion length of the refrigerant pipe into the cap nut is determined, and the refrigerant pipe is required to be inserted into the cap nut without shortage. Therefore, it is essential to mark a mark indicating the insertion length at an end of the refrigerant pipe in advance, and a gauge for easily measuring a position of the mark is also utilized.

However, when the operator does not carry the gauge, it is difficult to mark accurately, and there is a possibility that the reliability of the work cannot be secured. An object of the present disclosure is to provide a pipe joint cover capable of improving reliability of connection work of a refrigerant pipe.

### [SOLUTION TO PROBLEM]

The invention is defined by claim 1.
(1) A pipe joint cover of the present disclosure is a cover detachably attached to a joint body of a pipe joint, the pipe joint cover including a gauge that sets an insertion length of a refrigerant pipe connected to a cap nut of the pipe joint into the cap nut.

In the above configuration, since the cover of the joint body has the gauge, the gauge can be affixed to the refrigeration apparatus by, for example, attaching the cover to the joint body of the pipe joint of the refrigeration apparatus. Therefore, the refrigerant pipe can be accurately marked at a construction site by using the gauge included in the cover, and the reliability of connection work of the refrigerant pipe can be improved.

(2) The pipe joint cover according to (1) further includes a cylindrical body having an inner diameter into which the joint body is insertable, and a lid that closes one end of the cylindrical body in an axial direction and covers a distal end of the joint body inserted into the cylindrical body. The gauge is provided on a radially outer side of the cylindrical body.

In the above configuration, since the gauge is provided on the radially outer side of the cylindrical body, the gauge can be provided without being affected by a function of the pipe joint as a cover.

(3) In the pipe joint cover according to (1) , the gauge includes an outer member disposed on an outer peripheral side of the refrigerant pipe, an inner member disposed on an inner peripheral side of the refrigerant pipe, and a contact surface that positions the refrigerant pipe by bringing an end surface of the refrigerant pipe into contact with the contact surface between the outer member and the inner member, and the outer member preferably includes an instructing portion that indicates a position separated from the contact surface by a distance corresponding to the insertion length.

In the above configuration, by inserting the refrigerant pipe between the outer member and the inner member and bringing the end surface of the refrigerant pipe into contact with the contact surface, the insertion length of the refrigerant pipe to be inserted into the cap nut can be easily confirmed by the instructing portion.

(4) In the pipe joint cover according to (3), the contact surface is preferably exposed to outside.

In the above configuration, it is possible to easily check whether the refrigerant pipe is appropriately inserted between the outer member and the inner member and is in contact with the contact surface.

(5) In the pipe joint cover according to (1), according to a non-claimed configuration, the gauge preferably includes a cylindrical body having an inner diameter into which the refrigerant pipe is insertable, and a lid that closes one end of the cylindrical body in the axial direction and has a contact surface that positions the refrigerant pipe by bringing an end surface of the refrigerant pipe inserted into the cylindrical body into contact with the contact surface, and the cylindrical body preferably includes an instructing portion that indicates a position separated from the contact surface by a distance corresponding to the insertion length.

In the above configuration, by inserting the refrigerant pipe into the cylindrical body and bringing the end surface of the refrigerant pipe into contact with the lid, the insertion length of the refrigerant pipe to be inserted into the cap nut can be easily confirmed by the instructing portion.

(6) In the pipe joint cover according to (5), according to a non-claimed configuration, the instructing portion is preferably an opening that is formed in the cylindrical body and that allows an outer peripheral surface of the refrigerant pipe inserted into the cylindrical body to be exposed.

In this configuration, the insertion length of the refrigerant pipe to be inserted into the cap nut can be easily confirmed by the opening, and for example, marking can be performed on the outer peripheral surface of the refrigerant pipe by the writing instrument through the opening.

(7) In the pipe joint cover according to (5) or (6), according to a non-claimed configuration, the lid is preferably provided with an opening through which the contact surface is visually recognizable.

Such a configuration makes it possible to check whether the refrigerant pipe is appropriately inserted into the cylindrical body.

(8) In the pipe joint cover according to any one of (5) to (7), according to a non-claimed configuration, the lid preferably has an annular groove into which an end of the refrigerant pipe is inserted, and the groove preferably has a radially outer peripheral surface serving as a reference of an outer diameter dimension of the refrigerant pipe and a radially inner peripheral surface serving as a reference of an inner diameter dimension of the refrigerant pipe.

In this configuration, by inserting the refrigerant pipe into the groove, it is possible to check whether the outer diameter dimension and the inner diameter dimension of the refrigerant pipe are appropriate for insertion into the cap nut.

(9) In the pipe joint cover according to any one of (5) to (8), according to a non-claimed configuration, the cylindrical body preferably has an inner diameter into which the joint body is insertable, and covers, from the radially outer side, the joint body inserted, and the lid preferably covers the distal end of the joint body inserted into the cylindrical body.

In this configuration, since the cylindrical body and the lid which constitute the gauge can cover the joint body, the cover including the gauge can be made compact.

(10) The pipe joint cover according to any one of (5) to (8) according to a non-claimed configuration preferably further includes a second cylindrical body that has an inner diameter into which the joint body is insertable, and covers, from the radially outer side, the joint body inserted, in which the lid covers the distal end of the joint body inserted into the second cylindrical body.

In this configuration, one of the two cylindrical bodies can be used as a gauge and the other can be used as a cover, and the cover can be formed with an appropriate dimension according to each function.

### BRIEF DESCRIPTION OF DRAWINGS

FIG. 1 is a sectional view of a pipe joint to which a pipe joint cover according to a first embodiment of the present disclosure is attached.
FIG. 2 is a perspective view of the pipe joint cover.
FIG. 3 is a sectional view of the pipe joint cover.
FIG. 4A is a sectional view for describing a gauge function of the pipe joint cover.
FIG. 4B is an enlarged sectional view illustrating a state in which a refrigerant pipe is inserted into a gauge of the pipe joint cover.
FIG. 5 is a sectional view of the pipe joint.
FIG. 6 is a sectional view of the pipe joint.
FIG. 7 is a perspective view of a pipe joint cover according to a second embodiment of the present disclosure.
FIG. 8 is a sectional view for describing a gauge function of the pipe joint cover.
FIG. 9 is a perspective view of a pipe joint cover according to a third embodiment of the present disclosure.
FIG. 10 is a sectional view for describing a gauge function of the pipe joint cover.
FIG. 11 is a perspective view of a pipe joint cover according to a first embodiment of the invention.
FIG. 12 is a plan view of the pipe joint cover.
FIG. 13 is a sectional view of the pipe joint cover.
FIG. 14 is a perspective view of a pipe joint cover according to a second embodiment of the invention.
FIG. 15 is a sectional view of the pipe joint cover.
FIG. 16 is a front view of the pipe joint cover.
FIG. 17 is a sectional view of a pipe joint cover according to a another embodiment of the present disclosure.
FIG. 18 is a perspective view of a pipe joint cover according to another example of the present disclosure.
FIG. 19 is an exploded perspective view of the pipe joint cover.
FIG. 20 is a perspective view when the pipe joint cover is used as a gauge.

### DETAILED DESCRIPTION

Embodiments of the present disclosure will be described in detail hereinafter with reference to the accompanying drawings.

### [First embodiment]

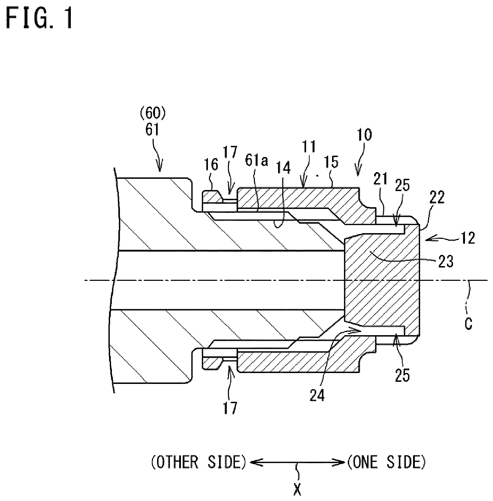

FIG. 1 is a sectional view of a pipe joint to which a pipe joint cover according to a first embodiment of the present disclosure is attached.

A pipe joint cover 10 is used in a refrigeration apparatus such as an air conditioner to cover a pipe joint 60 that connects a refrigerant pipe from the outside and suppress intrusion of foreign matter into the pipe joint 60. The pipe joint cover 10 is used from a stage when the refrigeration apparatus is manufactured and shipped by a manufacturer to a stage when the refrigerant pipe is connected at a construction site.

### (Configuration of pipe joint)

First, the pipe joint to which the pipe joint cover according to the present embodiment is applied will be described.

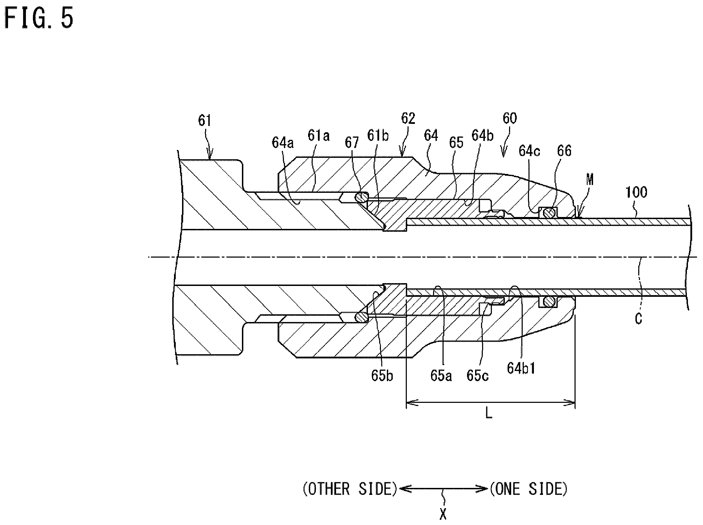

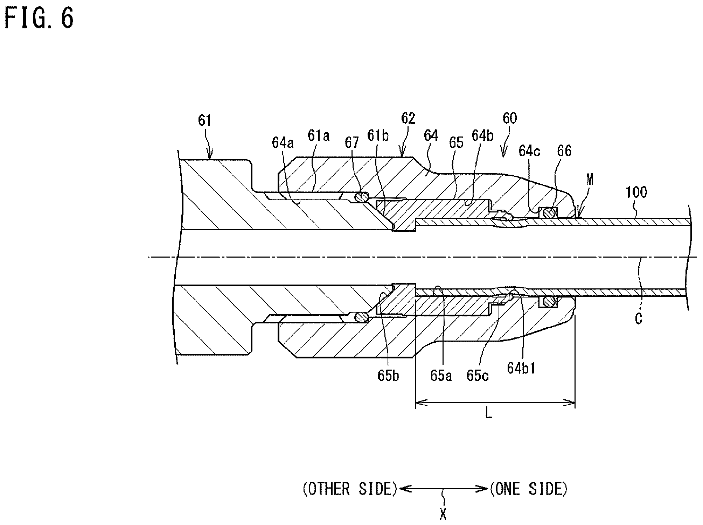

FIG. 5 and FIG. 6 are sectional views of the pipe joint. In particular, FIG. 5 illustrates a state immediately before a refrigerant pipe 100 is connected to the pipe joint 60, and FIG. 6 illustrates a state after the refrigerant pipe 100 is connected to the pipe joint 60. In FIG. 5 and FIG. 6, an axis of the pipe joint 60 is indicated by reference sign C. In the following description, a direction X parallel to the axis C of the pipe joint 60 is referred to as an axial direction.

The pipe joint 60 according to the present embodiment is a so-called flareless joint. The pipe joint 60 includes a joint body 61 and a cap nut 62. The joint body 61 is provided, for example, at a distal end of a refrigerant pipe extending from an outdoor unit or a heat exchanger of an indoor unit of an air conditioner, which is an example of a refrigeration apparatus, to the outside of the apparatus.

The joint body 61 has a cylindrical shape. The inside of the joint body 61 serves as a refrigerant flow path. An external thread 61a is formed on an outer peripheral surface on one side in the axial direction (right side in FIG. 5) of the joint body 61. An end surface 61b on one side in the axial direction of the joint body 61 is formed as a tapered surface inclined in a tapered shape. The joint body 61 may be formed integrally with a port such as a shutoff valve, or may be formed integrally with a pipe end of the refrigerant pipe.

The cap nut 62 includes a nut body 64, a stop ring 65, and seals 66 and 67. The nut body 64 has a cylindrical shape. Inside of the nut body 64, an internal thread 64a, an accommodation portion 64b, and a groove 64c are formed. An internal thread 64a is formed on an inner peripheral surface on the other side in the axial direction (left side in FIG. 5) of the nut body 64. The internal thread 64a can be fastened to the external thread 61a. In FIG. 5, the internal thread 64a of the nut body 64 is shallowly fastened to the external thread 61a of the joint body 61, and in FIG. 6, the internal thread 64a of the nut body 64 is deeply and completely fastened to the external thread 61a of the joint body 61.

A groove 64c is formed on the inner peripheral surface on one side in the axial direction of the nut body 64. A seal 66 is attached to the groove 64c. The seal 66 is, for example, an O-ring. The accommodation portion 64b is formed between the internal thread 64a and the groove 64c in the axial direction X of the nut body 64. The stop ring 65 is accommodated in the accommodation portion 64b. A seal 67 is accommodated between the stop ring 65 accommodated in the accommodation portion 64b and the internal thread 64a. The seal 67 is, for example, an O-ring. An inner peripheral surface 64b1 on one side in the axial direction of the accommodation portion 64b is formed as a tapered surface whose inner diameter decreases toward the one side.

The stop ring 65 has a cylindrical shape. An insertion portion 65a is provided inside of the stop ring 65. The insertion portion 65a is formed in a cylindrical surface having a constant inner diameter. The refrigerant pipe 100 connected to the joint body 61 is inserted into the insertion portion 65a. An end surface 65b on the other side in the axial direction of the stop ring 65 is formed as a tapered surface in surface contact with the distal end surface 61b of the joint body 61.

A claw 65c in contact with the tapered surface 64b1 of the nut body 64 is formed on one end in the axial direction X (right side in FIG. 5) of the stop ring 65. The claw 65c is engaged an outer peripheral surface of the refrigerant pipe 100 inserted into the insertion portion 65a to fix the refrigerant pipe 100. Specifically, as illustrated in FIG. 5, in a state where the internal thread 64a of the nut body 64 is shallowly fastened to the external thread 61a of the joint body 61, the claw 65c is separated from or slightly in contact with the outer peripheral surface of the refrigerant pipe 100. However, as illustrated in FIG. 6, when the internal thread 64a is deeply fastened to the external thread 61a, the claw 65c is pushed by the tapered surface 64b1 to be deformed toward the inner diameter, and is engaged with the outer peripheral surface of the refrigerant pipe 100 to fix the refrigerant pipe 100.

In order to connect the refrigerant pipe 100 to the joint body 61 as described above, a minimum length L of the refrigerant pipe 100 to be inserted into the cap nut 62 is determined for each pipe joint 60. Therefore, when connection work of the refrigerant pipe 100 is performed, it is required to mark a position indicating the minimum length L with a pen or the like. In FIG. 5 and FIG. 6, a marked mark is indicated by reference sign M. In order to mark accurately, it is essential to use a predetermined jig (gauge). However, the operator may not carry the jig, and in this case, there is a possibility that the connection quality of the refrigerant pipe 100 is not ensured.

Conventionally, the pipe joint 60 provided in a refrigeration apparatus is provided with a cover to prevent intrusion of foreign matter until the refrigerant pipe 100 is connected. In the case of a conventional flared joint, by fastening a cap nut in a state where the distal end of the joint body is covered with a plate-shaped cover, the cover is fixed. When the connection work of the refrigerant pipe is performed, the cap nut is detached from the joint body, and the cover is removed. Thereafter, the refrigerant pipe is flared, and the cap nut is fastened to the joint body with a flared portion of the refrigerant pipe in contact with the joint body.

In the present embodiment, since the flareless joint as described above is used and the cap nut for the flared joint is not used, the cover cannot be provided by a conventional method. Therefore, in the present embodiment, a cover 10 suitable for the flareless joint is used.

### (Configuration of pipe joint cover)

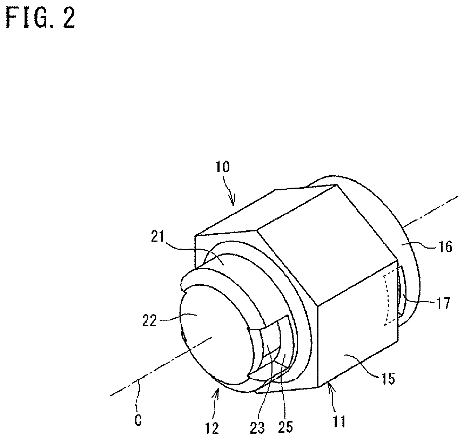

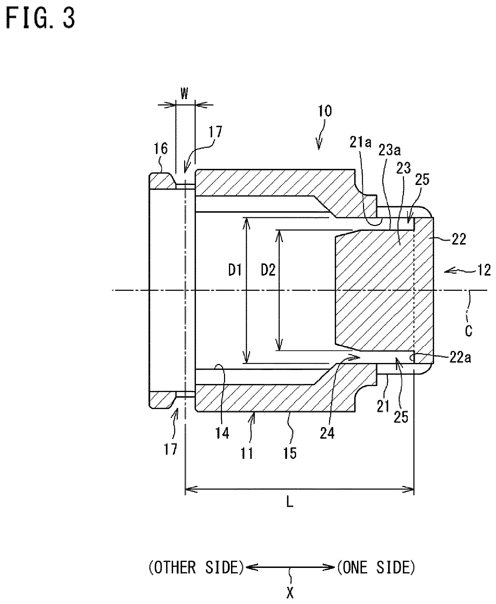

FIG. 2 is a perspective view of the pipe joint cover. FIG. 3 is a sectional view of the pipe joint cover.

As illustrated in FIGS. 1 to 3, the pipe joint cover 10 includes synthetic resin or metal. The pipe joint cover 10 includes a cylindrical body 11 and a lid 12. The cylindrical body 11 has a cylindrical shape having an axis parallel to the axial direction X. In a state where the cover 10 is attached to the joint body 61, the axis C of the joint body 61 and an axis of the cover 10 coincide with each other. Therefore, in the following description and drawings, the same reference sign C is also assigned to the axis of the cover 10.

An internal thread 14 is formed on an inner peripheral surface of the cylindrical body 11. The internal thread 14 can be fastened to the external thread 61a of the joint body 61 of the pipe joint 60. The cylindrical body 11 has a first outer peripheral surface 15 having a hexagonal shape on a radially outer side of the internal thread 14. By engaging a tool such as a wrench with the first outer peripheral surface 15, the internal thread 14 of the cylindrical body 11 can be easily fastened to the external thread 61a of the joint body 61.

The cylindrical body 11 has a second outer peripheral surface 16 having an outer diameter smaller than an outer diameter of the first outer peripheral surface 15 at an end on the other side in the axial direction X (left side in FIG. 1). The second outer peripheral surface 16 is provided with an opening 17 penetrating in a radial direction. In the present embodiment, the openings 17 are formed at two positions shifted in phase by 180°. The openings 17 are elongated in a circumferential direction. The opening 17 is used to mark the mark M with a writing instrument 101 such as a pen when the refrigerant pipe 100 is inserted.

An end on one side in the axial direction (right side in FIG. 1) of the cylindrical body 11 is closed by the lid 12. An end on the other side in the axial direction (the left side in FIG. 1) of the cylindrical body 11 is open. The lid 12 includes an outer cylinder 21, a bottom plate 22, and a protrusion 23. The outer cylinder 21 has a cylindrical shape and extends from an end on one side in the axial direction of the cylindrical body 11 toward one side in the axial direction. The outer cylinder 21 has an outer diameter smaller than the outer diameter of the first outer peripheral surface 15 of the cylindrical body 11.

The bottom plate 22 of the lid 12 is provided at an end on one side in the axial direction of the outer cylinder 21 and closes the outer cylinder 21. The bottom plate 22 has a circular plate shape.

The protrusion 23 of the lid 12 protrudes from the bottom plate 22 toward the inside of the cover 10 to the other side in the axial direction (left side in FIG. 1). The protrusion 23 has a columnar shape. A distal end of the protrusion 23 enters the cylindrical body 11. A distal end surface of the protrusion 23 closes a distal end opening of the joint body 61 to suppress intrusion of foreign matter into the joint body 61.

As illustrated in FIG. 3, most of an outer peripheral surface 23a of the protrusion 23 has a substantially constant outer diameter, and has a tapered shape such that a part on a distal end is slightly tapered. An annular groove 24 is formed between an inner peripheral surface 21a of the outer cylinder 21 and the outer peripheral surface 23a of the protrusion 23.

The outer cylinder 21 of the lid 12 is provided with an opening 25 penetrating in the radial direction. The openings 25 are formed at two positions shifted in phase by 180°. Through the openings 25, the inside of the cover 10, particularly a contact surface 22a of the bottom plate 22 to be described later, can be visually recognized from the outside of the cover 10.

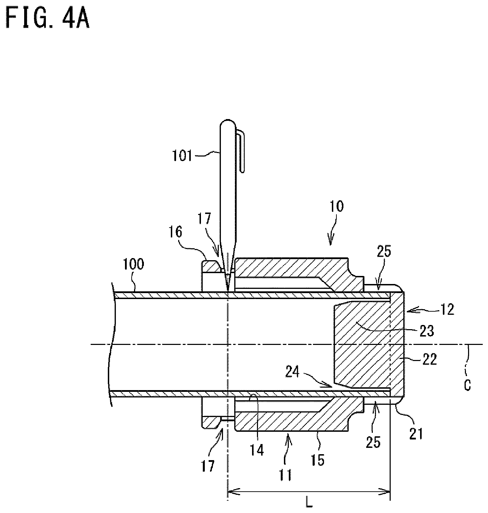

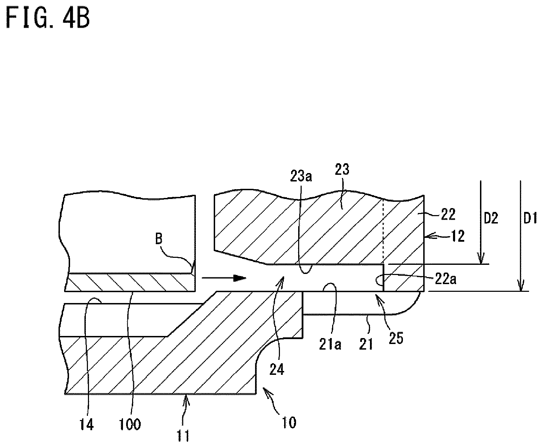

FIG. 4A is a sectional view for describing a gauge function of the pipe joint cover. FIG. 4B is an enlarged sectional view illustrating a state in which the refrigerant pipe is inserted into the gauge of the pipe joint cover.

The cover 10 according to the present embodiment has a gauge that marks on the refrigerant pipe 100. Specifically, the cylindrical body 11 and the lid 12 described above constitute the gauge. In other words, the cylindrical body 11 and the lid 12 have not only a function as the cover 10 but also a function as a gauge. As illustrated in FIG. 3, a distance L from the surface (contact surface) 22a on the other side in the axial direction of the bottom plate 22 of the lid 12 to the opening 17 of the cylindrical body 11 corresponds to the length L of the refrigerant pipe 100 to be inserted into the cap nut 62 of the pipe joint 60 as illustrated in FIG. 5.

When the cover 10 according to the present embodiment is used as a gauge, the cover 10 is detached from the joint body 61, and the refrigerant pipe 100 is inserted from the opening on the other side in the axial direction of the cylindrical body 11 of the cover 10. Furthermore, an end on one side in the axial direction of the refrigerant pipe 100 is inserted into the groove 24 of the lid 12, and an end surface of the refrigerant pipe 100 is brought into contact with the contact surface 22a of the bottom plate 22. Whether the end surface of the refrigerant pipe 100 is in contact with the contact surface 22a of the bottom plate 22 can be checked from the opening 25 formed in the outer cylinder 21.

The mark M (see FIG. 5 and FIG. 6) can be marked on the outer peripheral surface of the refrigerant pipe 100 by inserting the writing instrument 101 such as a pen from the opening 17 of the cylindrical body 11 in a state where the end surface of the refrigerant pipe 100 is in contact with the contact surface 22a. As a result, the length L of the refrigerant pipe 100 to be inserted into the cap nut 62 can be accurately set. Therefore, the refrigerant pipe 100 can be reliably connected to the pipe joint 60, variations in work by the operator can be reduced, and the possibility that the refrigerant leaks from the pipe joint 60 can be reduced. Consequently, even if a refrigerant leak from the refrigeration apparatus is detected, the pipe joint 60 can be excluded from a place where there is a possibility of a leak, which contributes to quick search for the location of the leak.

The opening 17 formed in the cylindrical body 11 allows the outer peripheral surface of the refrigerant pipe 100 inserted into the cover 10 to be exposed, and constitutes an instructing portion that indicates the insertion length L of the refrigerant pipe 100 into the cap nut 62. The opening 17 is formed so that the writing instrument 101 is inserted in a direction perpendicular to the axis C. For example, the opening 17 has a width w (see FIG. 3) in the axial direction X such that the writing instrument 101 does not reach the outer peripheral surface of the refrigerant pipe 100 even if the writing instrument 101 is inserted from a direction inclined with respect to the axis C. Therefore, the writing instrument 101 is prevented from being obliquely inserted into the opening 17, and marking can be performed at a more accurate position.

Since the refrigerant pipe 100 is cut by a dedicated tool as appropriate in the process of installation work of the air conditioner, as illustrated in FIG. 4B, a burr B may be generated at an inner peripheral edge or an outer peripheral edge of the end surface of the refrigerant pipe 100. When such a burr B is present, insertion of the refrigerant pipe 100 into the cap nut 62 is hindered, and there is a possibility that the refrigerant pipe 100 cannot be inserted with the required length L.

As illustrated in FIG. 3 and FIG. 4B, in the cover 10 according to the present embodiment, a radially outer peripheral surface (inner peripheral surface of the outer cylinder 21) 21a of the groove 24 formed in the lid 12 serves as a reference of an outer diameter dimension of the refrigerant pipe 100, and a radially inner peripheral surface (outer peripheral surface diameter of the protrusion 23) 23a of the groove 24 serves as a reference of an inner diameter dimension of the refrigerant pipe 100. In other words, a diameter D1 of the radially outer peripheral surface 21a of the groove 24 corresponds to an appropriate outer diameter of the refrigerant pipe 100, and a diameter D2 of the radially inner peripheral surface 23a of the groove 24 corresponds to an appropriate inner diameter of the refrigerant pipe 100. Therefore, when the burr B exists on the end surface of the refrigerant pipe 100 and the inner diameter or the outer diameter of the refrigerant pipe 100 is reduced or increased by the amount of the burr B, the burr B is caught by the peripheral surfaces 21a and 23a of the groove 24, and the refrigerant pipe 100 cannot be inserted until the burr B comes into contact with the contact surface 22a of the bottom plate 22. This configuration can make the operator recognize that the burr B is present in the refrigerant pipe 100, and prompt the operator to remove the burr B.

### [Second embodiment]

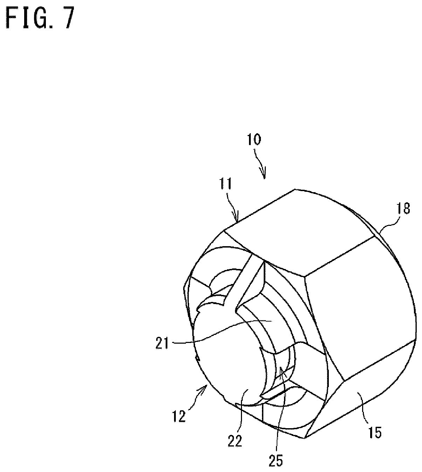

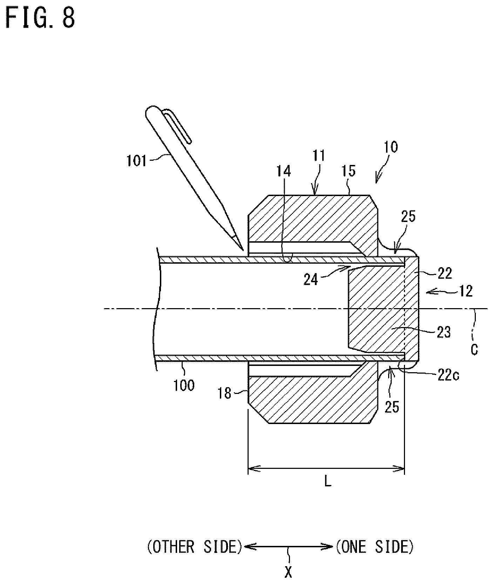

FIG. 7 is a perspective view of a pipe joint cover according to a second embodiment of the present disclosure. FIG. 8 is a sectional view for describing the gauge function of the pipe joint cover.

The pipe joint cover 10 according to the second embodiment is different from the pipe joint cover 10 according to the first embodiment in that the cylindrical body 11 is not provided with the opening 17 constituting the instructing portion. In the present embodiment, the distance L from the surface (contact surface) 22a on the other side in the axial direction (left side in FIG. 8) of the bottom plate 22 of the lid 12 to an end surface 18 on the other side in the axial direction of the cylindrical body 11 corresponds to the length of the refrigerant pipe 100 to be inserted into the cap nut 62 of the pipe joint 60. Therefore, the end surface 18 on the other side in the axial direction of the cylindrical body 11 constitutes the instructing portion indicating the position of the marking.

In the present embodiment, the end surface 18 of the cylindrical body 11 constitutes the instructing portion, and eliminates the need for the opening 17 like the instructing portion according to the first embodiment. Therefore, the dimension of the cover 10 in the axial direction X can be reduced, and the size can be further reduced.

However, in both the first and second embodiments, since the cylindrical body 11 functions as both the cover 10 and the gauge, the inner diameter of the cylindrical body 11 is set so that the joint body 61 having a larger outer diameter of the joint body 61 or the refrigerant pipe 100 can be inserted. Therefore, a gap is generated between the inner surface of the cylindrical body 11 and the outer peripheral surface of the refrigerant pipe 100 inserted into the cylindrical body 11. In the second embodiment, when marking is performed with the writing instrument 101, there is a possibility that the distal end of the writing instrument 101 enters the gap, and the position of the marking is not fixed. In this regard, in the first embodiment (see FIG. 4), the opening 17 is formed such that the writing instrument 101 is inserted in a direction perpendicular to the axis C, and marking can be performed at a certain position. Therefore, the first embodiment is more advantageous than the second embodiment.

### [Third embodiment]

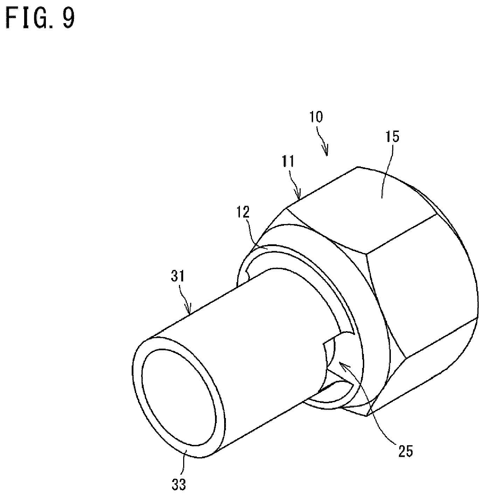

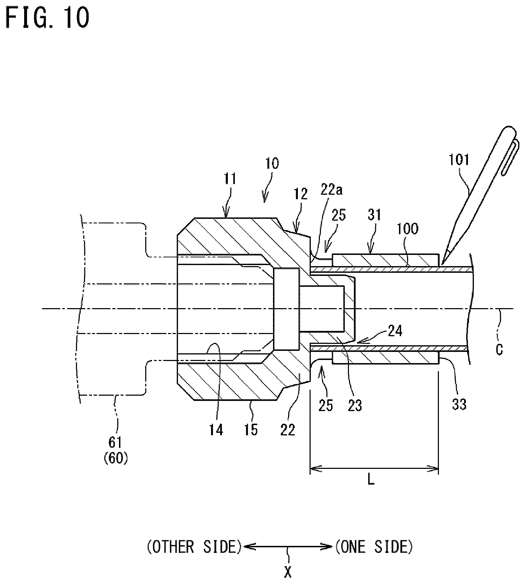

FIG. 9 is a perspective view of a pipe joint cover according to a third embodiment of the present disclosure. FIG. 10 is a sectional view for describing the gauge function of the pipe joint cover.

The cover 10 according to the third embodiment includes two cylindrical bodies 11 and 31. One cylindrical body (second cylindrical body) 11 functions as a cover of the joint body 61. The cylindrical body 11 has substantially the same configuration as the cylindrical body 11 according to the second embodiment. The other cylindrical body (first cylindrical body) 31 functions as a gauge of the refrigerant pipe 100. The lid 12 is disposed between the two cylindrical bodies 11 and 31. The lid 12 closes ends of the cylindrical bodies 11 and 31 in the axial direction X.

The first cylindrical body 31 and the second cylindrical body 11 have a cylindrical shape having the same axis C. The first cylindrical body 31 extends from the lid 12 to one side in the axial direction X. The first cylindrical body 31 has an outer diameter smaller than the outer diameter of the second cylindrical body 11. The inner diameter of the first cylindrical body 31 is slightly larger than the outer diameter of the refrigerant pipe 100, and when the refrigerant pipe 100 is inserted into the first cylindrical body 31, only a slight gap is generated between the first cylindrical body 31 and the refrigerant pipe 100. An opening 25 is formed at a proximal end of the first cylindrical body 31. The opening 25 allows visual recognition of whether the refrigerant pipe 100 is in contact with the bottom plate 22 of the lid 12.

The distance L between the surface (contact surface) 22a on one side in the axial direction X of the bottom plate 22 in the lid 12 and an end surface 33 on one side in the axial direction X of the cylindrical body 31 corresponds to the length of the refrigerant pipe 100 to be inserted into the cap nut 62. The end surface 33 of the cylindrical body 31 constitutes the instructing portion indicating the position of the marking.

The protrusion 23 of the lid 12 protrudes from the bottom plate 22 of the lid 12 to one side in the axial direction X and is disposed inside the first cylindrical body 31. The annular groove 24 is formed between an inner peripheral surface of the first cylindrical body 31 and the outer peripheral surface of the protrusion 23. The end of the refrigerant pipe 100 inserted into the first cylindrical body 31 is inserted into the groove 24. As in the first and second embodiments, the radially outer peripheral surface and the radially inner peripheral surface of the groove 24 serve as references of the outer diameter dimension and the inner diameter dimension of the refrigerant pipe 100, respectively.

In the present embodiment, the second cylindrical body 11 substantially functioning as a cover of the joint body 61 and the first cylindrical body 31 functioning as a gauge of the refrigerant pipe 100 are separate bodies. Therefore, the inner diameter of the first cylindrical body 31 as a gauge can be formed in accordance with the outer diameter of the refrigerant pipe 100, and the gap between the first cylindrical body and the refrigerant pipe can be reduced. Therefore, marking can be easily performed at a certain position by the writing instrument 101. In addition, since the opening 25 formed in the first cylindrical body 31 does not communicate with the inside of the second cylindrical body 11, foreign matter entering from the opening 25 does not enter the joint body 61.

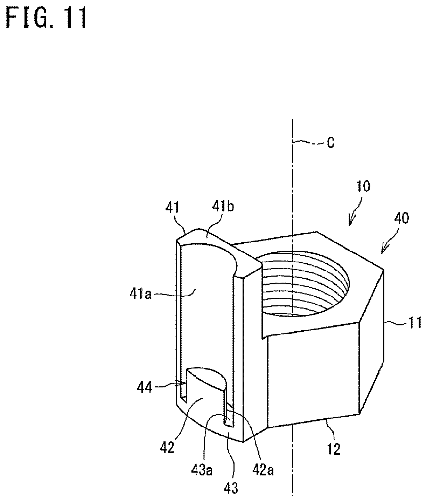

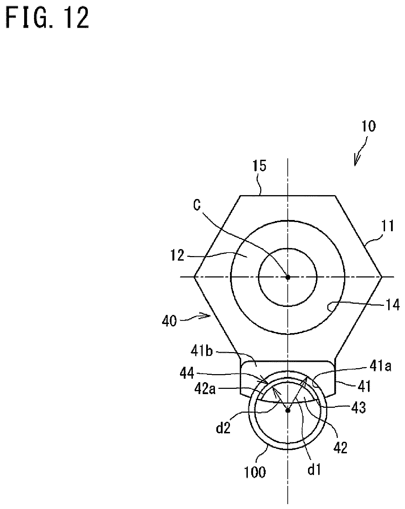

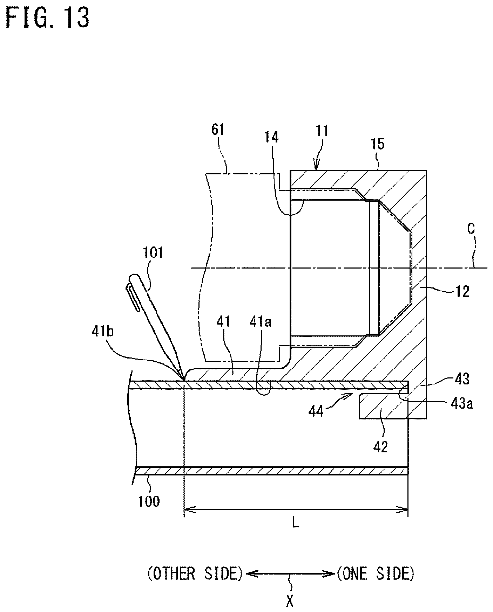

FIG. 11 is a perspective view of a pipe joint cover according to an embodiment of the invention. FIG. 12 is a plan view of the pipe joint cover. FIG. 13 is a sectional view of the pipe joint cover.

The pipe joint cover 10 according to this embodiment includes the cylindrical body 11 and the lid 12. The cylindrical body 11 and the lid 12 function as a substantial cover of the joint body 61. Hereinafter, the cylindrical body 11 and the lid 12 are also collectively referred to as a cover body 40. An internal thread 14 is formed on an inner peripheral surface of the cylindrical body 11. The internal thread 14 can be fastened to the external thread 61a of the joint body 61 of the pipe joint 60. The outer peripheral surface (first outer peripheral surface) 15 of the cylindrical body 11 has a hexagonal shape with which a tool such as a wrench can be engaged.

In addition to the cover body 40, the pipe joint cover 10 according to the present embodiment includes an outer member 41 functioning as a gauge, an inner member 42, and a connection member 43. The cover body 40, the outer member 41, the inner member 42, and the connection member 43 are integrally formed by a synthetic resin material.

The outer member 41 is provided on a part (one hexagonal surface) of the outer peripheral surface 15 of the cylindrical body 11. The outer member 41 has a rectangular plate shape. The outer member 41 is formed to be longer than the cover body 40 in the axial direction X. An end surface on one side in the axial direction X (right side in FIG. 13) of the outer member 41 is disposed on the same plane as an end surface on one side in the axial direction X of the cover body 40 (the outer surface of the lid 12). An end surface 41b on the other side in the axial direction X (left side in FIG. 13) of the outer member 41 is disposed on the other side in the axial direction X with respect to the end surface on the other side in the axial direction X of the cover body 40, and protrudes from the cover body 40.

The inner member 42 has a rectangular or square plate shape. The inner member 42 is disposed outside the outer member 41 in the radial direction of the cylindrical body 11. The inner member 42 is formed to be shorter than the outer member 41 in the axial direction X. An end surface on one side in the axial direction X (right side in FIG. 13) of the inner member 42 is disposed on the same plane as an end surface on one side in the axial direction X of the cover body 40 and the outer member 41 (the outer surface of the lid 12). An end on the other side in the axial direction X (left side in FIG. 13) of the inner member 42 is disposed on one side in the axial direction X with respect to the end surface on the other side in the axial direction X of the cover body 40.

The connection member 43 connects an end on one side in the axial direction X of the outer member 41 and an end on one side in the axial direction X of the inner member 42. A groove 44 opened to the other side in the axial direction is formed between the outer member 41 and the inner member 42 connected by the connection member 43. An end of the refrigerant pipe 100 is inserted into the groove 44. The connection member 43 has a contact surface 43a that positions the refrigerant pipe 100 by bringing an end surface of the refrigerant pipe 100 inserted into the groove 44 into contact with the contact surface 43a. The distance L from the contact surface 43a to the end surface 41b on the other side in the axial direction X of the outer member 41 corresponds to the length L of the refrigerant pipe 100 to be inserted into the cap nut 62 of the pipe joint 60 as illustrated in FIG. 5. The end surface 41b on the other side in the axial direction X of the outer member 41 constitutes an instructing portion.

A side surface 41a of the outer member 41 facing the inner member 42 has an arc shape. A side surface 42a of the inner member 42 facing the outer member 41 also has an arc shape. The side surfaces 41a and 42a constitute a peripheral surface forming the arc-shaped groove 44. A center line of the arc-shaped groove 44 is parallel to the axis C of the cylindrical body 11.

The groove 44 has a circumferential length into which a range equal to or less than a half circumference of the refrigerant pipe 100 is inserted. Therefore, the gauge (the outer member 41, the inner member 42, the connection member 43, and groove 44) of the cover 10 can be downsized, and the entire cover 10 can also be downsized. However, the groove 44 may have a length in the circumferential direction into which a range of a half circumference or more of the refrigerant pipe 100 is inserted.

One peripheral surface (side surface of the outer member 41) 41a of the groove 44 serves as a reference of the outer diameter dimension of the refrigerant pipe 100, and the other peripheral surface (side surface of the inner member 42) 42a of the groove 44 serves as a reference of the inner diameter dimension of the refrigerant pipe 100. In other words, as illustrated in FIG. 12, a radius d1 of curvature of one peripheral surface 41a of the groove 44 corresponds to half (radius) of the appropriate outer diameter of the refrigerant pipe 100, and the radius of curvature d2 of the other peripheral surface 42a of the groove 44 corresponds to half (radius) of the appropriate inner diameter of the refrigerant pipe 100.

When the cover 10 according to the present embodiment is used as a gauge, the cover 10 is detached from the joint body 61, the end of the refrigerant pipe 100 is inserted into the groove 44 between the outer member 41 and the inner member 42, and the end surface of the refrigerant pipe 100 is brought into contact with the contact surface 43a. Whether the end surface of the refrigerant pipe 100 is in contact with the contact surface 43a can be checked from the outside. Since the groove 44 has a length less than or equal to a half circumference of the refrigerant pipe 100, the presence or absence of the burr B on the entire circumference of the refrigerant pipe 100 can be checked by rotating the refrigerant pipe 100 while being inserted into the groove 44.

Then, the mark M (see FIG. 5 and FIG. 6) is marked on the outer peripheral surface of the refrigerant pipe 100 with the writing instrument 101 such as a pen along the end surface (instructing portion) 41b of the outer member 41 in a state where the end surface of the refrigerant pipe 100 is in contact with the contact surface 43a. As a result, the length L of the refrigerant pipe 100 to be inserted into the cap nut 62 can be accurately set. Therefore, the refrigerant pipe 100 can be reliably connected to the pipe joint 60, variations in work by the operator can be reduced, and the possibility that the refrigerant leaks from the pipe joint 60 can be reduced. As a result, even if a refrigerant leak from the refrigeration apparatus is detected, the pipe joint 60 can be excluded from a place where there is a possibility of a leak, which contributes to quick search for the location of the leak.

In the present embodiment, the instructing portion indicating the insertion length L of the refrigerant pipe 100 may be an opening (for example, the opening 17 described in the first embodiment) formed in the outer member 41 instead of the end surface 41b of the outer member 41. In the present embodiment, the end surface 41b on the other side in the axial direction X (left side in FIG. 13) of the outer member 41 protrudes from the end surface on the other side in the axial direction X of the cover body 40, but is not required to protrude. For example, when the axial length of the cylindrical body 11 has a dimension corresponding to the insertion length L of the refrigerant pipe 100, the end surface 41b on the other side in the axial direction X of the outer member 41 and the end surface on the other side in the axial direction X of the cover body 40 can be disposed on the same plane. In this case, the cylindrical body 11 itself can also be used as the outer member 41. In this case, an arc-shaped peripheral surface that forms the groove 44 is only required to be formed on the outer peripheral surface of the cylindrical body 11.

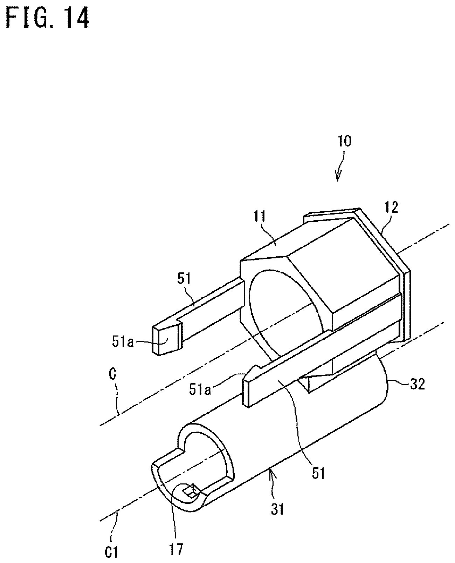

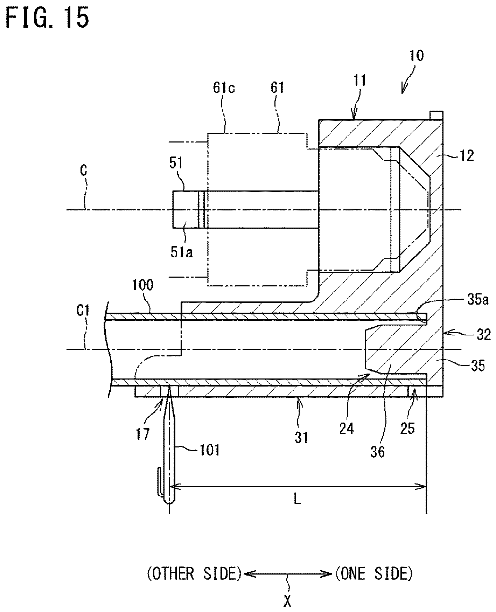

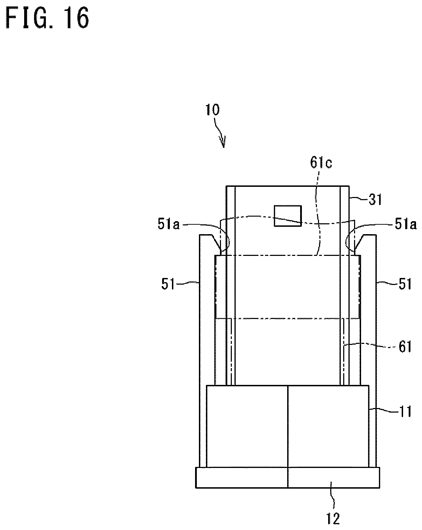

FIG. 14 is a perspective view of a pipe joint cover according to a second embodiment of the invention. FIG. 15 is a sectional view of the pipe joint cover. FIG. 16 is a front view of the pipe joint cover.

The cover 10 according to the this embodiment includes two cylindrical bodies 11 and 31. One cylindrical body (second cylindrical body) 11 functions as a cover of the joint body 61 together with the lid 12. The cylindrical body 11 has substantially the same configuration as the cylindrical body 11 according to the fourth embodiment (see FIG. 13). However, the internal thread 14 is not formed on the inner peripheral surface of the cylindrical body 11.

An end on one side in the axial direction X (right side in FIG. 15) of the cylindrical body 11 is closed by the lid 12. A pair of claws 51 protrudes from the other end of the cylindrical body 11 in the axial direction X. Protrusions 51a are formed on surfaces of the pair of claws 51 facing each other. A large diameter portion 61c having a hexagonal shape for engaging a tool such as a wrench is formed on a proximal end of the external thread 61a in the joint body 61. The protrusion 51a of the claw 51 is caught by the large diameter portion 61c of the joint body 61 inserted into the cylindrical body 11, and thus, the cover 10 can be fixed to the joint body 61.

The other cylindrical body (first cylindrical body) 31 functions as a gauge of the refrigerant pipe 100. One cylindrical body 11 and the other cylindrical body 31 have different axes C and C1. The axes C and C1 of the cylindrical bodies 11 and 31 are disposed substantially parallel to each other. The other end on one side in the axial direction X of the cylindrical body 31 is closed by a lid 32. An outer surface (a surface on one side in the axial direction X (right side in FIG. 15)) of the lid 32 is disposed on the same plane as the outer surface of the lid 12. The lid 32 includes a bottom plate 35 and a protrusion 36. The bottom plate 35 has a contact surface 35a that positions the refrigerant pipe 100 by bringing an end surface of the refrigerant pipe 100 inserted into the cylindrical body 31 into contact with the contact surface 35a.

The inner diameter of the cylindrical body 31 is slightly larger than the outer diameter of the refrigerant pipe 100. Therefore, when the refrigerant pipe 100 is inserted into the cylindrical body 31, only a slight gap is generated between the cylindrical body 31 and the refrigerant pipe 100. The opening 25 is formed at the proximal end of the cylindrical body 31. The opening 25 allows visual recognition of whether the end surface of the refrigerant pipe 100 is in contact with the contact surface 35a of the lid 32.

The opening 17 is formed in the cylindrical body 31. The distance L between the contact surface 35a of the lid 32 and the opening 17 corresponds to the length L of the refrigerant pipe 100 to be inserted into the cap nut 62. The opening 17 constitutes the instructing portion indicating the position of the marking.

The protrusion 36 of the lid 12 has a columnar shape, protrudes from the bottom plate 35 of the lid 32 to the other side in the axial direction X, and is disposed inside the cylindrical body 31. The annular groove 24 is formed between the inner peripheral surface of the first cylindrical body 31 and the outer peripheral surface of the protrusion 23. The end of the refrigerant pipe 100 inserted into the cylindrical body 31 is inserted into the groove 24. As in the first and second embodiments, the radially outer peripheral surface and the radially inner peripheral surface of the groove 24 serve as references of the outer diameter dimension and the inner diameter dimension of the refrigerant pipe 100, respectively.

In the present embodiment, the cylindrical body 11 substantially functioning as a cover of the joint body 61 and the cylindrical body 31 functioning as a gauge of the refrigerant pipe 100 are separately configured and integrated. Therefore, the inner diameter of the cylindrical body 31 as a gauge can be formed in accordance with the outer diameter of the refrigerant pipe 100, and the gap between the cylindrical body and the refrigerant pipe can be reduced. Therefore, marking can be easily performed at a certain position by the writing instrument 101. In addition, since the opening 25 formed in the cylindrical body 31 does not communicate with the inside of the cylindrical body 11, foreign matter entering from the opening 25 does not enter the joint body 61.

In the present embodiment, the cylindrical body 31 constitutes the outer member 41 described in the fourth embodiment, and the protrusion 36 of the lid 32 constitutes the inner member 42 described in the fourth embodiment. In other words, the present embodiment can be said to be a modification in which the groove 44 according to the fourth embodiment is provided in the range of the entire circumference of the refrigerant pipe 100. Therefore, in the present embodiment, the cylindrical body 31 and the lid 32 constituting the gauge are provided on the radially outer side of the cylindrical body 11 functioning as the cover.

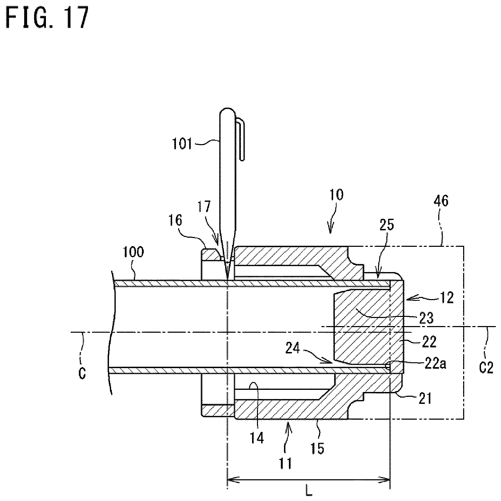

FIG. 17 is a sectional view of a pipe joint cover according to a sixth embodiment of the present disclosure.

The sixth embodiment is substantially a modification of the first embodiment (see FIG. 1). As in the first embodiment, the cover 10 according to the present embodiment includes the cylindrical body 11, the lid 12 (the outer cylinder 21, the bottom plate 22, and the protrusion 23), the internal thread 14, the openings 17 and 25, and the like. However, in the present embodiment, the axis C of the cylindrical body 11 and an axis C2 of the protrusion 23 are eccentric. The annular groove 24 formed between the outer peripheral surface of the protrusion 23 and the inner peripheral surface of the outer cylinder 21 is also eccentric to the axis C of the cylindrical body 11.

Therefore, when the end of the refrigerant pipe 100 is inserted into the groove 24 in the cylindrical body 11, a part of the outer peripheral surface of the refrigerant pipe 100 approaches a part of the inner peripheral surface of the cylindrical body 11, and the gap between the cylindrical body and the refrigerant pipe is reduced. Therefore, the writing instrument 101 inserted into the opening 17 is less likely to tilt, and marking can be easily performed at a certain position by the writing instrument 101.

In the present embodiment, a covering member 46 that closes the opening 25 of the lid 12 is provided. The covering member 46 has a shape that covers all of the outer cylinder 21 and the bottom plate 22 of the lid 12. The covering member 46 is formed by a transparent or translucent member. Therefore, even in a state where the opening 25 is closed, the opening 25 is visually recognizable from the outside, and it can be checked whether the end surface of the refrigerant pipe 100 is in contact with the contact surface 22a. By providing such a covering member 46, intrusion of foreign matter from the opening 25 into the cover 10 can be suppressed. Note that the covering member 46 is not required to be provided.

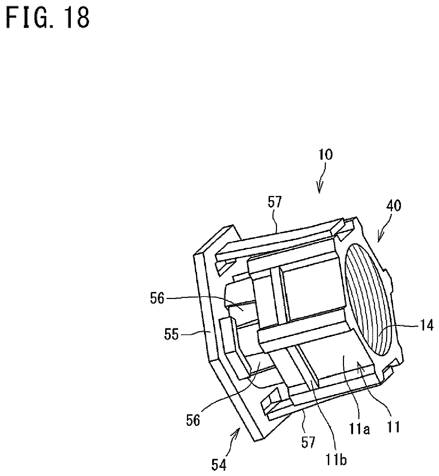

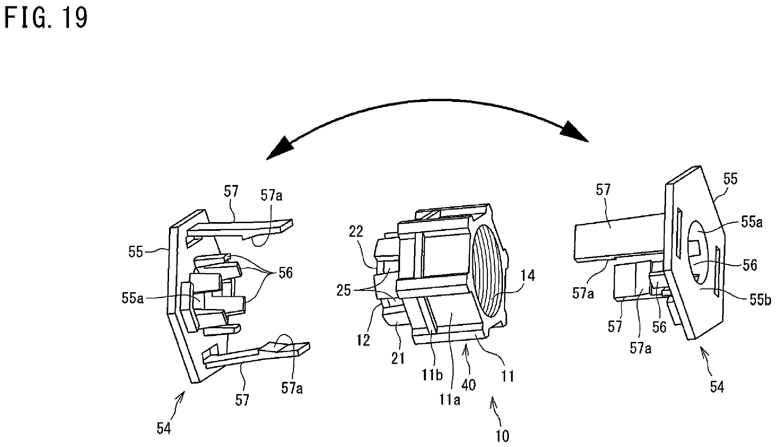

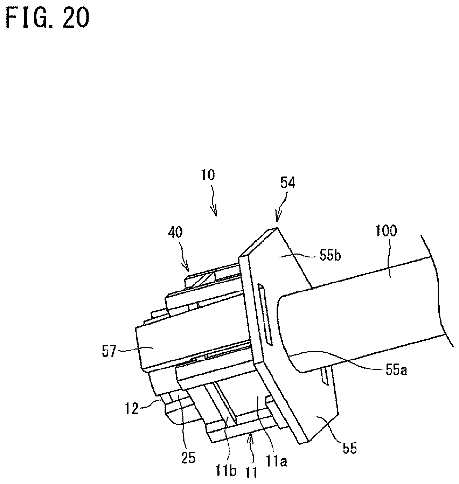

FIG. 18 is a perspective view of a pipe joint cover according to a seventh embodiment of the present disclosure. FIG. 19 is an exploded perspective view of the pipe joint cover. FIG. 20 is a perspective view when the pipe joint cover is used as a gauge.

The cover 10 according to the seventh embodiment includes, as separate bodies, the cover body 40 having the cylindrical body 11 and the lid 12, and a gauge member 54 substantially constituting a gauge. The gauge member 54 is detachably attached to the cover body 40. The gauge member 54 is used in a first mode (mode used as a cover of the joint body 61) in which the gauge member is attached to the cover body 40 from one side in the axial direction (left side in FIG. 19) and a second mode (mode used as a gauge of the refrigerant pipe 100) in which the gauge member is attached to the cover body 40 from the other side in the axial direction (right side in FIG. 19).

The cylindrical body 11 and the lid 12 according to the present embodiment are substantially the same as the cylindrical body 11 and the lid 12 according to the second embodiment (see FIG. 7 and FIG. 8), and the protrusion 23 and the groove 24 illustrated in FIG. 8 are formed inside the cylindrical body 11. However, in the present embodiment, the outer cylinder 21 of the lid 12 has the openings 25 formed at three or more locations (six locations in the illustrated example). A groove 11a into which a claw 57 of the gauge member 54 is fitted and a projection 11b that hooks the claw 57 are formed on the outer peripheral surface of the cylindrical body 11.

The gauge member 54 includes a body 55, a plurality of covering portions 56, and a pair of claws 57. The body 55 has a flat plate shape. A through hole 55a is formed at a center of the body 55. The through hole 55a has an inner diameter slightly larger than the outer diameter of the refrigerant pipe 100. The outer periphery of the body 55 has substantially the same hexagonal shape as the outer peripheral surface of the cylindrical body 11.

The plurality of covering portions 56 protrudes from one surface of the body 55. The plurality of covering portions 56 are arranged at equal intervals around the through hole 55a of the body 55. The plurality of covering portions 56 closes the opening 25 formed in the cylindrical body 11 when attached to the cylindrical body 11 in the first mode (see FIG. 18). Therefore, in the first mode, it is possible to suppress intrusion of foreign matter into the cover 10 from the opening 25.

The pair of claws 57 protrudes from one surface of the body 55. The pair of claws 57 has protrusions 57a on surfaces facing each other. In both the first mode and the second mode, the pair of claws 57 is caught by the projection 11b formed on the cylindrical body 11, and thus, the gauge member 54 is attached to the cover body 40.

When the gauge member 54 is attached to the cover body 40 in the second mode, the opening on one side in the axial direction of the cylindrical body 11 (the opening on the side opposite to the lid 12) is covered by the body 55 of the gauge member 54. In the present embodiment, an outer surface 55b of the body 55 constitutes an instructing portion. Therefore, by inserting the refrigerant pipe 100 into the through hole 55a, inserting the end of the refrigerant pipe 100 into the groove 24 (see FIG. 8) in the lid 12, and marking with the writing instrument 101 along the outer surface 55b of the body 55, the insertion length L of the refrigerant pipe 100 can be accurately set. Since the through hole 55a of the body 55 can be formed in accordance with the outer diameter of the refrigerant pipe 100, a gap between the refrigerant pipe 100 and the through hole 55a can be reduced, and marking can be performed at a fixed position by the writing instrument 101.

### [Other embodiments]

In the above embodiment, the refrigerant pipe 100 is marked by using the writing instrument 101, but marking may be performed by other means. For example, marking may be performed by a seal. In this case, a seal may be provided so as to cover the opening 17 from the inside of the cylindrical body 11 according to the first embodiment, and a rod or the like may be inserted into the opening 17 from the outside of the cylindrical body 11 to attach the seal to the refrigerant pipe.

In the above embodiment, the internal thread 14 fastened to the external thread 61a of the joint body 61 and the claw 51 caught by the joint body 61 are formed on the cylindrical body 11 of the cover 10, but the cover 10 may be attached to the joint body 61 by other means. For example, the cover 10 may be attached to the joint body 61 with an adhesive tape or the like. The cover 10 may be attached to the joint body 61 with a packing material.

The specific configuration of the pipe joint 60 is not limited to the examples of FIG. 5 and FIG. 6, and a conventionally known configuration can be adopted.

### [Action and effects of embodiments]

(1) The pipe joint cover 10 according to the above embodiment is a cover detachably attached to the joint body 61 of the pipe joint 60, and includes a gauge that sets an insertion length L of the refrigerant pipe 100 coupled to the cap nut 62 of the pipe joint 60 into the cap nut 62.

By attaching the cover 10 to the joint body 61 of the pipe joint 60 in the refrigeration apparatus, the gauge can be affixed to the refrigeration apparatus. Therefore, in the construction site, the cover 10 can be detached from the joint body 61, and the refrigerant pipe 100 can be accurately marked by using the gauge of the cover 10, and the reliability of the connection work of the refrigerant pipe 100 can be improved.

Since the length L of the refrigerant pipe 100 to be inserted into the cap nut 62 of the pipe joint 60 changes in accordance with the diameter of the refrigerant pipe 100, various types of gauges are required. Preparing such various types of gauges by the operator significantly increases the burden on the operator. It is also conceivable to add a gauge as a fixture to a product of the refrigeration apparatus, but if a different type of gauge is erroneously attached, there is a possibility that the refrigerant pipe is not be appropriately connected. In the present embodiment, for the cover attached to the joint body, the refrigerant pipe connected to the joint body can have a function of a gauge according to a diameter, so that the burden on the operator can be suppressed, and a different type of gauge can be prevented from being added.

(2) In the first and second embodiment of the invention, the cover 10 further includes the cylindrical body 11 having an inner diameter into which the joint body 61 is insertable, and the lid 12 that closes one end of the cylindrical body 11 in the axial direction and covers the distal end of the joint body 61 inserted into the cylindrical body 11. The gauge is provided on the radially outer side of the cylindrical body 11. Since the gauge is provided on the radially outer side of the cylindrical body 11 in such a manner, the gauge can be provided without being affected by a function of the joint body 61 as a cover. In addition, since the gauge is provided on the radially outer side of the cylindrical body 11, it is possible to suppress an increase in size of the cover 10 in the axial direction. When the size of the cover 10 increases in the axial direction, the cover 10 protrudes largely from the refrigeration apparatus, and there is a possibility that a packaging size of the refrigeration apparatus increases. However, such a disadvantage can be eliminated by using the cover 10 according to the above embodiment.

(3) In the first and second embodiment of the invention, the gauge includes the outer member 41 disposed on the outer peripheral side of the refrigerant pipe 100, the inner member 42 disposed on the inner peripheral side of the refrigerant pipe 100, and the contact surfaces 43a and 35a that position the refrigerant pipe 100 by bringing the end surface of the refrigerant pipe 100 into contact between the outer member 41 and the inner member 42. The outer member 41 includes the instructing portions 41b and 17 that indicate positions separated from the contact surfaces 43a and 35a by a distance corresponding to the insertion length L. Therefore, by inserting the refrigerant pipe 100 between the outer member 41 and the inner member 42 and bringing the end surface of the refrigerant pipe 100 into contact with the contact surfaces 43a and 35a, the length L of the refrigerant pipe 100 to be inserted into the cap nut 62 can be easily confirmed by the instructing portions 41b and 17.

(4) In the first embodiment of the invention, contact surface 43a is exposed to outside. It is therefore possible to easily check whether the end surface of the refrigerant pipe 100 inserted into the groove 44 is in contact with the contact surface 43a.

(5) In the first to third, and sixth embodiments of the disclosure respectively in the second embodiment of the invention, the gauge includes the cylindrical bodies 11 and 31 having an inner diameter into which the refrigerant pipe 100 is insertable, and a lids 12 and 32 that close one end of the cylindrical bodies 11 and 31 in the axial direction X and have contact surfaces 22a and 35a that position the refrigerant pipe 100 by bringing an end surface of the refrigerant pipe inserted into the cylindrical bodies 11 and 31 into contact with the contact surfaces 22a and 35a, and the cylindrical bodies 11 and 31 include an instructing portions 17, 18, and 33 that indicate a position separated from the contact surfaces 22a and 35a by a distance corresponding to the insertion length L. Therefore, by inserting the refrigerant pipe 100 into the cylindrical bodies 11 and 31 and bringing the end surface of the refrigerant pipe 100 into contact with the lid 12, the insertion length of the refrigerant pipe 100 to be inserted into the cap nut 62 can be easily confirmed by the instructing portions 17, 18, and 33.

(6) In the first, and sixth embodiments of the disclosure, respectively the second embodiment of the invention, the instructing portion 17 is an opening formed in the cylindrical bodies 11 and 31 and capable of exposing the outer peripheral surface of the refrigerant pipe 100 inserted into the cylindrical bodies 11 and 31. Therefore, the insertion length of the refrigerant pipe 100 to be inserted into the cap nut 62 can be easily confirmed by the opening 17, and for example, marking can be performed on the outer peripheral surface of the refrigerant pipe 100 by the writing instrument 101 through the opening 17.

(7) In the first to third and seventh embodiments of the disclosure, respectively the second embodiment of the invention, the lid 12 is provided with the opening 25 through which the contact surfaces 22a and 35a are visually recognizable. It is therefore possible to easily check whether the refrigerant pipe 100 is appropriately inserted into the cylindrical bodies 11 and 31.

(8) In the first to third and seventh embodiments of the disclosure, respectively the second embodiment of the invention, the lid 12 has the annular groove 24 into which an end of the refrigerant pipe 100 is inserted, and the groove 24 has the radially outer peripheral surface 21a serving as a reference of an outer diameter dimension of the refrigerant pipe 100 and the radially inner peripheral surface 23a serving as a reference of an inner diameter dimension of the refrigerant pipe 100. Therefore, by inserting the refrigerant pipe 100 into the groove 24, it is possible to check whether the outer diameter dimension and the inner diameter dimension of the refrigerant pipe 100 are appropriate dimensions for insertion into the cap nut 62.

(9) In the first, second, sixth, and seventh embodiments of the disclosure, the cylindrical body 11 has an inner diameter into which the joint body 61 is insertable, and covers, from radially outside, the joint body 61 inserted, and the lid 12 covers the distal end of the joint body 61 inserted into the cylindrical body 11. In this configuration, since the cylindrical body 11 and the lid 12 which constitute the gauge can cover the joint body 61, the cover 10 including the gauge can be made compact.

(10) In the third embodiments of the disclosure, respectively the second embodiment of the invention, the cover 10 has an inner diameter into which the joint body 61 is insertable, and includes the second cylindrical body 11 that covers, from radially outside, the joint body 61 inserted, and the lid 12 covers the distal end of the joint body 61 inserted into the second cylindrical body 11. Therefore, one cylindrical body (first cylindrical body) 31 of the two cylindrical bodies 11 and 31 can be used as a gauge, and the other cylindrical body (second cylindrical body) 11 can be used as a cover. An appropriate dimension according to each function, for example, the inner diameter of the first cylindrical body 31 can be formed to a dimension suitable for the refrigerant pipe 100, and the inner diameter of the second cylindrical body 11 can be formed to a dimension suitable for the joint body 61.

### REFERENCE SIGNS LIST

- 10: pipe joint cover
- 11: cylindrical body
- 12: lid
- 17: opening (instructing portion)
- 18: end surface (instructing portion)
- 21a: peripheral surface
- 22a: contact surface
- 23a: peripheral surface
- 24: groove
- 25: opening
- 31: cylindrical body
- 32: lid
- 33: end surface (instructing portion)
- 35a: contact surface
- 36: protrusion
- 41: outer member
- 41b: end surface (instructing portion)
- 42: inner member
- 43a: contact surface
- 44: groove
- 60: pipe joint
- 61: joint body
- 62: cap nut
- 100: refrigerant pipe
- L: insertion length

## Claims

1. A pipe joint cover detachably attached to a joint body (61) of a pipe joint (60), the pipe joint cover comprising
a gauge that sets an insertion length (L) of a refrigerant pipe (100) coupled to a cap nut (62) of the pipe joint (60) into the cap nut (62), further comprising:
a cylindrical body (11) having an inner diameter into which the joint body (61) is insertable; and
a lid (12) that closes one axial end of the cylindrical body (11) and covers a distal end of the joint body (61) inserted into the cylindrical body (11), wherein
the gauge is provided on a radially outer side of the cylindrical body (11), wherein
the gauge includes an outer member (41) disposed on an outer peripheral side of the refrigerant pipe (100), an inner member (42) disposed on an inner peripheral side of the refrigerant pipe (100), and a contact surface (43a) that positions the refrigerant pipe by bringing an end surface of the refrigerant pipe into contact with the contact surface (43a) between the outer member (41) and the inner member (42), and
the outer member (41) includes an instructing portion (41b) that indicates a position separated from the contact surface (43a) by a distance corresponding to the insertion length (L).

2. The pipe joint cover according to claim 1, wherein the contact surface (43a) is exposed to outside.

## Patentansprüche

1. Rohrverbindungsabdeckung, die lösbar an einem Verbindungskörper (61) einer Rohrverbindung (60) angebracht ist, wobei die Rohrverbindungsabdeckung Folgendes umfasst
eine Lehre, die eine Einstecklänge (L) einer Kältemittelleitung (100), die mit einer Überwurfmutter (62) der Rohrverbindung (60) gekoppelt ist, in die Überwurfmutter (62) festlegt, weiter umfassend:
einen zylindrischen Körper (11) mit einem Innendurchmesser, in den der Verbindungskörper (61) einführbar ist; und
einen Deckel (12), der ein axiales Ende des zylindrischen Körpers (11) schließt und ein distales Ende des in den zylindrischen Körper (11) eingesetzten Verbindungskörpers (61) abdeckt, wobei
die Lehre auf einer radial äußeren Seite des zylindrischen Körpers (11) bereitgestellt ist, wobei
die Lehre ein Außenglied (41), das auf einer äußeren Umfangsseite der Kältemittelleitung (100) angeordnet ist, ein Innenglied (42), das auf einer inneren Umfangsseite der Kältemittelleitung (100) angeordnet ist, und eine Kontaktfläche (43a) einschließt, die die Kältemittelleitung positioniert, indem eine Endfläche der Kältemittelleitung zwischen dem Außenglied (41) und dem Innenglied (42) mit der Kontaktfläche (43a) in Kontakt gebracht wird, und
das Außenglied (41) einen Anweisungsabschnitt (41b) einschließt, der eine Position anzeigt, die von der Kontaktfläche (43a) um einen Abstand getrennt ist, der der Einstecklänge (L) entspricht.

2. Rohrverbindungsabdeckung nach Anspruch 1, wobei die Kontaktfläche (43a) nach außen freiliegt.

## Revendications

1. Couvre-joint de tuyau fixé de manière détachable à un corps (61) de joint d'un joint (60) de tuyau, le couvre-joint de tuyau comprenant
une jauge qui définit une longueur d'insertion (L) d'un tuyau (100) de fluide frigorigène raccordé à un écrou borgne (62) du joint (60) de tuyau dans l'écrou borgne (62), comprenant en outre :
un corps cylindrique (11) présentant un diamètre interne dans lequel le corps (61) de joint peut être inséré ; et
un couvercle (12) qui ferme une extrémité axiale du corps cylindrique (11) et recouvre une extrémité distale du corps (61) de joint inséré dans le corps cylindrique (11), dans lequel
la jauge est prévue sur un côté radialement externe du corps cylindrique (11), dans lequel
la jauge inclut un élément externe (41) disposé sur un côté périphérique externe du tuyau (100) de fluide frigorigène, un élément interne (42) disposé sur un côté périphérique interne du tuyau (100) de fluide frigorigène, et une surface de contact (43a) qui positionne le tuyau de fluide frigorigène en amenant une surface d'extrémité du tuyau de fluide frigorigène en contact avec la surface de contact (43a) entre l'élément externe (41) et l'élément interne (42), et
l'élément externe (41) inclut une partie d'instruction (41b) qui indique une position séparée de la surface de contact (43a) par une distance correspondant à la longueur d'insertion (L).

2. Couvre-joint de tuyau selon la revendication 1, dans lequel la surface de contact (43a) est exposée vers l'extérieur.
